# EUROPEAN PATENT APPLICATION

(11) **EP 4 651 313 A1**
(43) Date of publication of application: **19.11.2025**
(21) Application number: 25176730.7
(22) Date of filing: 15.05.2025
(51) Int. Cl.: H01R 13/52

(54) **CABLE SEAL WITH ENDURING SEALING EFFECT, SEAL ASSEMBLY AND ELECTRICAL PLUG CONNECTOR**

(30) Priority: 16.05.2024 DE 102024113797
(71) Applicant: TE Connectivity Solutions GmbH, 8200 Schaffhausen (CH)
(72) Inventor: HILDMANN, Roman, 8200 Schaffhausen (CH)
(74) Representative: Grünecker Patent- und Rechtsanwälte PartG mbB

(57) **Abstract**

The present invention relates to a seal (1) for a cable (10), in particular a cable with a relaxing insulation, with a cable receptacle (2) extending through the seal in an axial direction (12) for receiving the cable at least in sections with a first inner sealing lip (4) that is arranged in the cable receptacle, protrudes radially inward and comprises a first sealing lip inner diameter (16), with a second inner sealing lip (6) that is spaced apart from the first inner sealing lip in the axial direction, is arranged in the cable receptacle, protrudes radially inward and comprises a second sealing lip inner diameter (18), with an inner auxiliary sealing lip (8) that is arranged between the first and second inner sealing lip with respect to the axial direction, comprises a third sealing lip inner diameter (20) and protrudes radially inward, wherein the third sealing lip inner diameter is larger than the first and second sealing lip inner diameter. Further, the invention relates to a seal assembly with such a seal as well as to an electrical plug connector with the seal according to the invention and/or a seal assembly. The sealing effect of the seal according to the invention decreases over time, at least to a lesser extent.

## Description

The present invention relates to a seal for a cable, in particular a cable with a relaxing insulation, as well as a seal assembly with such a seal. The invention further relates to an electrical plug connector that has a seal and/or seal assembly according to the invention.

Cable seals are known. Often, cable seals have sealing lips that can be brought into contact in a sealing manner with the cable sheath. In this case, the sealing effect of the cable seal depends largely on the fact that the sealing lips abut against the cable sheath and are pressed sufficiently strongly against the cable sheath.

Ageing processes of the cable, which may be accelerated by environmental influences such as high temperatures, can cause the cable sheath to deform plastically over time. As a result, it is no longer ensured that the cable sheath abuts in a sealing manner against the sealing lips - the sealing effect of the seal decreases.

Consequently, the underlying problem of the present invention is to provide a cable seal, the sealing effect of which decreases over time at least to a lesser extent.

This problem is solved by a seal for a cable, in particular a cable with a relaxing insulation, with a cable receptacle extending through the seal in an axial direction and configured to receive the cable at least in sections, with a first inner sealing lip that is arranged in the cable receptacle and protrudes radially inward and comprises a first sealing lip inner diameter, with a second inner sealing lip that is spaced apart from the first inner sealing lip in the axial direction, is arranged in the cable receptacle, protrudes radially inward and comprises a second sealing lip inner diameter, and with at least one inner auxiliary sealing lip that is arranged between the first and second inner sealing lip with respect to the axial direction, comprises a third sealing lip inner diameter, that is arranged in the cable receptacle and protrudes radially inward, wherein the third sealing lip inner diameter is larger than the first and second sealing lip inner diameters.

The sealing effect of a cable seal depends, among other things, on the surface pressure between the cable sheath and the sealing lips which are in contact with it. Over time and under the influence of environmental factors such as high temperatures, it is possible that the material of the cable sheath shrinks. In particular, the diameter of the cable at the contact surfaces between the cable sheath and the sealing lips may become smaller, resulting in reduced surface pressure at these points. In addition to a direct decrease in the sealing effect, the material of the cable sheath can also not be held within the seal and can be pushed out of the seal or flow out of it. Over time, the amount of cable sheath material inside the seal and thus the sealing effect decreases.

To counteract this problem, the first and second inner sealing lips of the seal according to the invention have a smaller sealing lip inner diameter than the inner auxiliary sealing lips. The force exerted by the first and second inner sealing lip on the cable sheath thus outweighs the force exerted by the inner auxiliary sealing lips in the opposite direction on the cable sheath. As a result, the material of the cable sheath is pressed axially inward into the seal. Over time, more of the sheath material remains inside the seal, which means that the sealing effect of the seal according to the invention decreases at least to a lesser extent over time.

The above invention can be further improved by the following features, each of which is preferred independently and can be combined with each other as desired.

The sealing lip inner diameter can correspond to a clear inner diameter of the seal or the cable receptacle of the seal. Furthermore, the sealing lip inner diameter can be measured at the point on a sealing lip that protrudes the furthest inward in the radial direction or that projects the furthest radially into the cable receptacle.

The first and second inner sealing lips can have the same sealing lip inner diameter, so that the first sealing lip inner diameter corresponds to the second sealing lip inner diameter.

In one configuration, the inner sealing lips and/or the inner auxiliary sealing lips are evenly spaced apart from one another in the axial direction. However, it is also conceivable that the distance in the axial direction of the inner sealing lips and/or the inner auxiliary sealing lips changes along the axial direction. Thus, for example, the distance between two adjacent inner sealing lips in the axial direction can change progressively, linearly, or degressively.

The term "inner sealing lip" may refer to a first inner sealing lip, a second inner sealing lip or an inner auxiliary sealing lip. In particular, an "inner auxiliary sealing lip" in the present document may also be referred to as an "inner sealing lip" and an "inner sealing lip" may denote an "inner auxiliary sealing lip".

The seal can be made at least partially, however preferably completely, that is, monolithically, from a silicone. In this case, for example, solid silicones or liquid silicones can be considered. Of course, it is also conceivable that at least one section of the seal is made of a solid silicone and at least one other section of the seal is made of a liquid silicone. Regardless of the material used, the seal can be injection molded, at least in sections, however preferably completely.

In order to improve the sealing effect of the seal, a plurality of inner auxiliary sealing lips can be provided in accordance with a preferred configuration, wherein the at least one inner auxiliary sealing lip is part of this plurality and the sealing lip inner diameters of the plurality of inner auxiliary sealing lips are each larger than the first and second sealing lip inner diameters. A plurality of inner auxiliary sealing lips may be understood to mean a number of at least two, however preferably more than two inner auxiliary sealing lips.

According to a further embodiment, the sealing lip inner diameters of the plurality of inner auxiliary sealing lips can become larger, in particular continuously larger, in the direction of an axial center of the seal. This reduces the force that the inner auxiliary sealing lips exert on the cable sheath in the axial outward direction and thus prevents material of the cable sheath from being pressed out of the seal.

The axial center of the seal can be understood to be the point of the seal that is at the level of half the axial width of the seal. The seal can be configured symmetrically to a radial plane running through the axial center of the seal.

In a further configuration, the sealing lip inner diameters of the first and second inner sealing lips and of the at least one inner auxiliary sealing lip of the plurality of inner auxiliary sealing lips can become degressively larger in the direction of the axial center of the seal. Such a course of the sealing lip inner diameter prevents the material of the cable sheath from flowing out of the seal even more effectively, resulting in a further improvement in the sealing effect.

The cable receptacle or the volume enclosed by the first and second inner sealing lips and the at least one inner auxiliary sealing lip can be essentially convex, concave, barrel-shaped or cylinder-shaped. Furthermore, the radially most protruding points of the inner sealing lips, i.e. the points that project the furthest into the receptacle, can lie on a convex, concave, barrel-shaped or cylinder-shaped surface or span the same.

In order to further improve the sealing effect of the seal, the first and/or second inner sealing lip can be stiffened in accordance with a further aspect of the invention. In order to be able to flexibly adapt the degree of stiffness to the respective application of the seal and to implement the stiffening constructively in a simple manner, the at least one inner sealing lip can be stiffened by a stiffening element according to one embodiment. The stiffening element can thereby be configured as a particularly cost-effective plastic ring, which is arranged on at least one axial end of the seal. In a simple and therefore particularly cost-effective configuration, the plastic ring can be injection molded onto the seal. The axial end of the seal on which the plastic ring is arranged can be the end of an inner sealing lip facing away from the axial center of the seal in the axial direction. This inner sealing lip can correspond in particular to the first or second inner sealing lip, which is or are to be stiffened by the plastic ring.

In order to configure the seal as a whole to be even more stable, the plastic ring can, according to a further embodiment, comprise a collar section that protrudes perpendicularly from the remaining plastic ring and projects into the seal in the axial direction. This collar section can penetrate and/or pass through the seal at least in sections. The plastic ring can be configured monolithically or from at least two different materials. For example, the collar section can be made of a different material from the remaining plastic ring.

In order to prevent incisions or indentations on the cable sheath, at least one insertion section can be provided at least at one axial end of the seal, wherein an inside diameter of the at least one insertion section is constant in the axial direction, according to a preferred configuration. The insertion section and/or a section of the cable receptacle enclosed by the insertion section can be essentially or completely cylindrical. The insertion section and/or the section of the cable receptacle enclosed by the insertion section can thus, for example, essentially or completely have the shape of a tube, a sleeve or a pipe.

In order to facilitate the insertion of the cable into the seal, at least one axial end of the seal can be provided with at least one lead-in chamfer, wherein an inside diameter of the at least one lead-in chamfer increases in a direction pointing axially away from the axial center of the seal. The inside diameter of the lead-in chamfer can change linearly along the axial direction of the seal. In this case, the lead-in chamfer can be straight. In a further configuration, the lead-in chamfer can be curved or rounded, in that the internal diameter of the seal changes in the axial direction pointing away from the axial center of the seal, for example, in a progressive or degressive manner. Of course, the lead-in chamfer can also be configured to be ball-shaped, toroidal or ovoid, at least in sections.

A compact configuration of the seal, particularly in the axial direction, and thus a configuration that saves installation space, is achieved when the at least one lead-in chamfer or the at least one insertion section merges into the inner sealing lip that is arranged at the axial end of the seal that is provided with the lead-in chamfer or the at least one insertion section. The inner sealing lip, into which the lead-in chamfer or the insertion section merges or which merges into the lead-in chamfer or the insertion section, can be thickened, for example, in an annular or bulging manner. Furthermore, a lead-in chamfer or a insertion section can also be formed by at least a section of an inner sealing lip. In this way, a flank of the sealing lip associated with the axial end of the seal can form the lead-in chamfer or the insertion section or can comprise this or these.

In a particularly preferred configuration, the at least one insertion section or the at least one lead-in chamfer merges seamlessly into the inner sealing lip, in particular into the apex of the inner sealing lip. The inner diameter of the at least one insertion section can correspond to the sealing lip inner diameter of the inner sealing lip into which the insertion section merges. Of course, however, the inner diameter of the at least one insertion section can also be smaller or larger than the sealing lip inner diameter of the inner sealing lip into which the at least one insertion section merges.

The inner diameter of the at least one insertion section can be selected depending on parameters of the cable, for example on geometric parameters and/or parameters relating to the material of the cable sheath. In particular, a tendency of the cable sheath to creep can be taken into account when dimensioning the insertion section of the seal.

According to a further preferred configuration, the seal can be at least symmetrical to a radial plane extending through the seal at least half of the axial width of the seal. Such symmetrical configuration of the seal has the effect that the forces exerted by the sealing lips arranged at the axial ends of the seal section also act symmetrically inwards. This causes more cable sheath material to be pressed axially inward into the seal, further improving the sealing effect.

Half the axial width of the seal can be understood to mean the axial center of the seal.

In a further configuration, a contour of at least one inner sealing lip that projects into the cable receptacle can be asymmetrical to a radial plane running through an apex of the at least one inner sealing lip. Inner sealing lips with such an asymmetrical configuration can exert greater pressure on the cable sheath in the direction of the axial center of the seal. In this way, the cable sheath material is even more effectively prevented from being pressed out of the seal over time, which prevents or limits a decrease in the sealing effect over time. The apex of an inner sealing lip can be understood to be the point at which the sealing lip has the smallest sealing lip inner diameter or at which the inner sealing lip projects, juts out or protrudes the furthest radially inward into the cable receptacle.

The at least one inner sealing lip with an asymmetrical contour can be inclined at an acute angle of inclination relative to the radial direction in the direction of the axial center of the seal. In one configuration, the angles of inclination of the inner sealing lips can become more acute, preferably continuously, in the direction of the axial center of the seal. Such a course of the angles of inclination can be, for example, degressive, progressive or linear.

The sealing lip arranged at the axial center of the seal preferably has a symmetrical contour rather than an asymmetrical one, and the angle of inclination of this sealing lip can have an angle of inclination of 0° relative to the radial direction.

In order to make the seal even more flexible for use in other applications, the seal can have, on its outside facing away from the cable receptacle with respect to the radial direction, at least one outer sealing lip projecting radially outward.

The outside of the seal can also be understood to mean a circumferential side or an outer circumference of the seal. In a preferred configuration, the seal can also have several outer sealing lips that are spaced apart from one another in the axial direction of the seal. The axial distance between adjacent outer sealing lips can be the same as or different from the axial distance between adjacent inner sealing lips or inner auxiliary sealing lips. The outer and inner sealing lips, for example, can be offset relative to one another in the axial direction in such a way that at least one mountain of an outer sealing lip is arranged at the same height in relation to the axial direction as one valley of an inner sealing lip. Of course, the outer and inner sealing lips can be arranged at the same height in relation to the axial direction. For example, a mountain of at least an outer sealing lip can be at the same height as a mountain of an inner sealing lip with respect to the axial direction. Similarly, a valley of at least an outer sealing lip can be at the same height as a valley of an inner sealing lip with respect to the axial direction. In one configuration, there can be as many outer sealing lips as there are inner sealing lips.

At least one outer sealing lip can be arranged at the same axial height as the at least one lead-in chamfer and/or the at least one insertion section.

The outer sealing lips can be configured in the same way as the inner sealing lips. For example, a first outer sealing lip with a first sealing lip outer diameter, a second outer sealing lip with a second sealing lip outer diameter, and at least one outer auxiliary sealing lip with a third sealing lip outer diameter can be provided, wherein the first and second sealing lip outer diameters are larger than the third sealing lip outer diameter.

The relaxing insulation of the cable, for example, can be understood to mean thermo-relaxing insulation or insulation that relaxes under the influence of other environmental factors.

The present invention also includes a seal assembly comprising a seal according to the invention and a cable that is received at least in sections in the cable receptacle, wherein a sheath of the cable has a new state and an aged state, in which the sheath of the cable is plastically deformed relative to the new state, and wherein the material of the sheath of the cable in the aged state is at least partially pressed in the direction of the axial center of the seal, so that the auxiliary sealing lips abut in a sealing manner against the sheath of the cable. Such a seal assembly has a sealing effect that is stable over time and is therefore particularly reliable and safe.

The material of the sheath of the cable can be at least partially displaced, pushed, pressed and/or squashed in the direction of the axial center of the seal in the aged state and can alternatively or cumulatively flow or relax in the direction of the axial center of the seal.

In both the new and aged states of the cable sheath, all the inner sealing lips - that is, the first and second inner sealing lips and the at least one inner auxiliary sealing lip - can abut against the sheath of the cable in a sealing manner.

In the aged state, the sheath of the cable may be plastically deformed in sections - in particular at the point where the first and/or second inner sealing lip abuts against the sheath of the cable in a sealing manner. This plastically deformed section can, for example, be at least partially bulging, ring-shaped or toroidal. The plastically deformed section of the sheath of the cable can be arranged on a side of the first or second inner sealing lip facing the axial center of the seal. By the first and second inner sealing lip exerting pressure on the sheath of the cable, the sheath of the cable may be dented at the points where the first and second inner sealing lip abut against the sheath. The cable may thus have a smaller diameter here than at points where the cable is not in contact with the first and second inner sealing lip. At the points where the first and second inner sealing lips are in contact with the sheath and could be dented as a result, the plastically deformed section cannot overcome in the axial direction outwards. As a result, more material of the sheath of the cable remains in the axial direction between the first and second inner sealing lips.

The first and second inner sealing lips can exert a force on the sheath of the cable that presses the sheath, in particular the material of the sheath, in the direction of the axial center of the seal. The inner auxiliary sealing lips can exert a force on the sheath of the cable that is directed opposite to the force exerted by the first and second inner sealing lips on the sheath of the cable. The force exerted by the first and second inner sealing lips on the sheath of the cable may, in particular, be greater than the force exerted by the inner auxiliary sealing lips in the opposite direction on the sheath of the cable. In this way, the forces acting in the direction of the axial center of the seal on the sheath of the cable can prevail, so that the material of the sheath of the cable is held within the seal. "Within the seal" can mean the part of the cable receptacle that is arranged between the first and second sealing lip in the axial direction, or the part of the cable receptacle that extends between the axial ends of the seal, that is, over the entire axial width of the seal. The above explanations can apply to both the cable in a new state and in an aged state. The term "directed opposite" does not have to be used or understood in a mathematically precise sense. For example, the vectors of forces that are referred to as directed opposite in the present application text do not necessarily have to run along a straight line. Furthermore, forces directed opposite can be understood to mean that only individual directional components of the forces are directed opposite each other.

The first and second inner sealing lips can act as limiters that hold the material of the sheath of the cable in the area of the cable receptacle that is arranged in the axial direction between the first and second inner sealing lips. The term "limiter" can be understood to mean that the first and second inner sealing lips prevent or at least impede the material of the cable sheath from exceeding or passing axial points at which the first and second inner sealing lips are arranged. Preferably, there is almost no relative movement between the point of the cable sheath that is in contact with the first or second inner sealing lip and the first or second inner sealing lip.

The absolute amount of material of the sheath of the cable that is inside the seal can be identical or at least essentially the same in the new and aged state of the cable. The amount of material can be understood to mean both a mass and a volume of material.

The invention also relates to an electrical plug connector with at least one seal and/or at least one seal assembly according to the invention. Such a plug connector is particularly well and consistently sealed and is therefore reliable, durable and safe.

In the following, the invention is explained in more detail by means of embodiments with reference to the attached Figures. In doing so, individual features present in the following embodiment may be omitted if, in accordance with the above embodiments, the technical effect associated with this feature is not important. Conversely, a feature described above but not present in a subsequent embodiment may be added to the embodiment if the technical effect associated with that feature is important for a particular application.

In the following, the same reference signs are used for elements that correspond to each other in terms of structure and/or function.

It is shown by:
- Fig. 1: a schematic sectional view of a seal according to a possible embodiment;
- Fig. 2: a schematic perspective view of a seal according to a further possible embodiment;
- Fig. 3: a schematic sectional view of a seal according to the embodiment shown in Fig. 2;
- Fig. 4: a detailed view of the seal shown in Fig. 3;
- Fig. 5: a schematic sectional view of a seal according to a further possible embodiment;
- Fig. 6: a detailed view of an asymmetrical inner auxiliary sealing lip according to a further possible embodiment;
- Fig. 7: a schematic cross-sectional view of a seal assembly with a cable in a new state;
- Fig. 8: a schematic cross-sectional view of a seal assembly with a cable in an aged state;
- Fig. 9: a schematic sectional view of an electrical plug connector according to the invention according to a possible embodiment; and
- Fig. 10a: schematic sectional view of a seal according to a further possible embodiment.

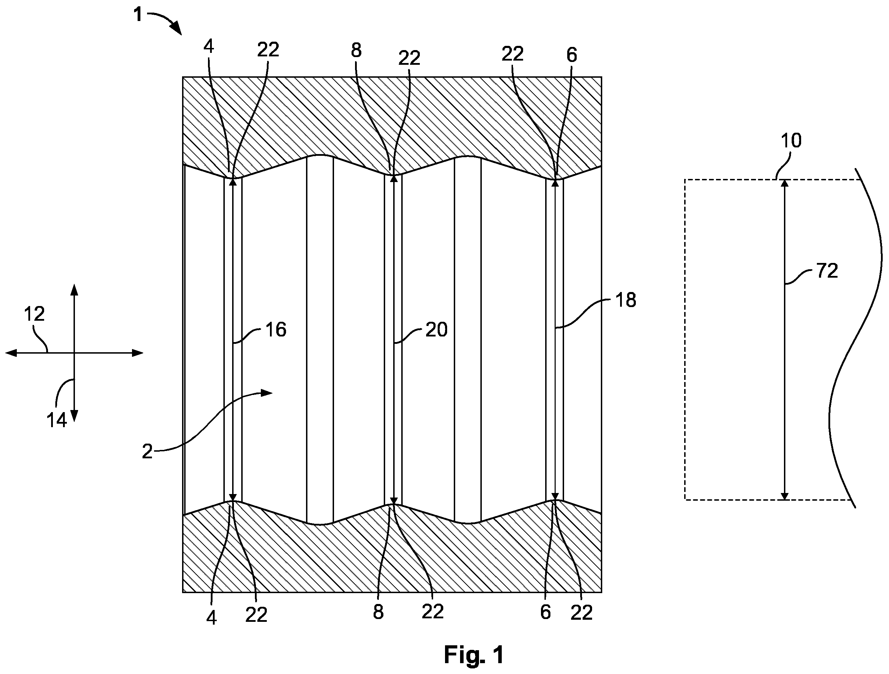

In the following, the structure of a seal according to the invention is explained by way of example with reference to Figures 1 to 6.

The seal shown in Fig. 1 comprises a cable receptacle 2, a first inner sealing lip 4, a second inner sealing lip 6 and an inner auxiliary sealing lip 8. The cable receptacle 2 is configured to receive a cable 10, which is merely indicated in Fig. 1 by a dashed line, and extends through the seal 1 in an axial direction 12. The first and second inner sealing lips 4, 6 are spaced apart from one another in the axial direction 12 and protrude inward into the cable receptacle 2 in a radial direction 14 perpendicular to the axial direction 12. The inner auxiliary sealing lip 8 is located between the first and second inner sealing lips 4, 6 with respect to the axial direction 12 and also protrudes in the radial direction 14 inward into the cable receptacle 2. The first and second inner sealing lips 4, 6 comprise a first or second sealing lip inner diameter 16, 18, and the inner auxiliary sealing lip 8 comprises a third sealing lip inner diameter 20. The third sealing lip inner diameter 20 of the inner auxiliary sealing lip 8 is larger than the first and second sealing lip inner diameters 16, 18 of the first and second inner sealing lips 4, 6. The sealing lip inner diameters 16, 18, 20 of all inner sealing lips 4, 6, 8 - of the first inner sealing lip 4, of the second inner sealing lip 6 and of the at least one inner auxiliary sealing lip 8 - can be measured at an apex 22 of the respective inner sealing lip 4, 6, 8. The apex 22 can be understood as the point of an inner sealing lip 4, 6, 8 that is arranged furthest inwards in the radial direction 14.

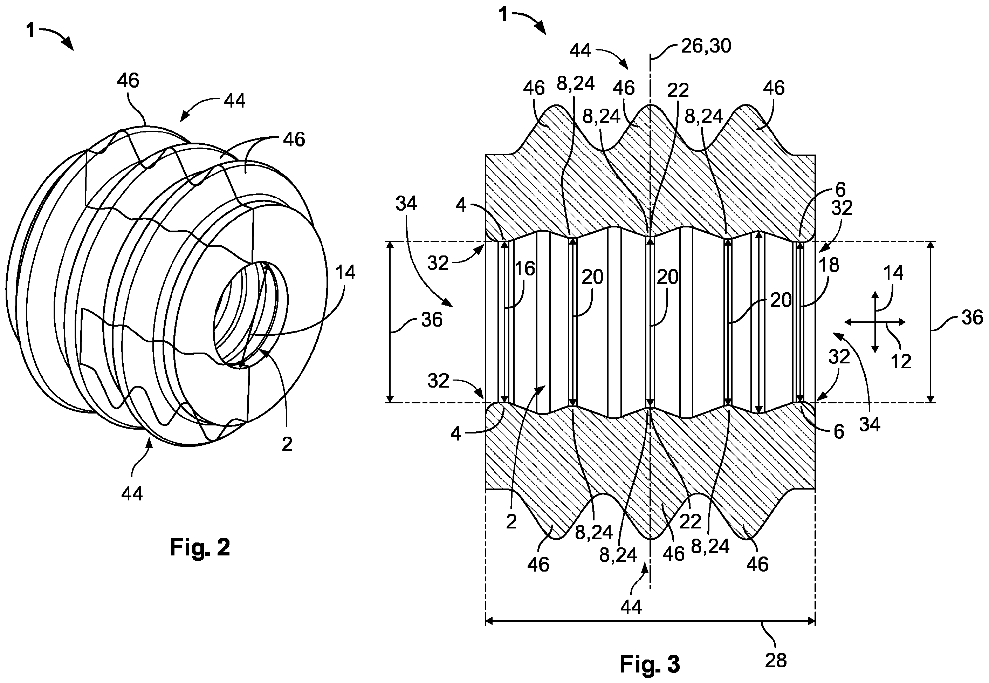

As can be seen from the sectional view of the seal 1 shown in Fig. 2 in perspective, the seal 1 can also have more than one inner auxiliary sealing lip 8, namely a plurality 24 of inner auxiliary sealing lips 8. In the embodiment shown in Fig. 3, the seal 1 has a plurality 24 of a total of three inner auxiliary sealing lips 8, which are arranged in the axial direction 12 between the first and second inner sealing lips 4, 6. In the embodiment shown here, too, each inner auxiliary sealing lip 8 of the plurality 24 of inner auxiliary sealing lips 8 comprises a third sealing lip inner diameter 20, which is in each case larger than the first sealing lip inner diameter 16 of the first inner auxiliary sealing lip 4 and the second sealing lip inner diameter 18 of the second inner sealing lip 6.

As can also be seen in Fig. 3, the third sealing lip inner diameters 20 of the plurality 24 of inner auxiliary sealing lips 8 can increase in the direction of an axial center 26 of the seal 1. Thus, the central one in the axial direction 12 of the three inner auxiliary sealing lips 8 can have a larger third sealing lip inner diameter 20 than the other two inner auxiliary sealing lips 8 of the plurality 24 of inner auxiliary sealing lips 8.

It is particularly preferred when the sealing lip inner diameters 16, 18, 20 of the first inner sealing lip 4, the second inner sealing lip 6 and the at least one inner auxiliary sealing lip 8 of the plurality 24 of inner auxiliary sealing lips 8 become degressively larger in the direction of the axial center 26 of the seal 1, as shown in Fig. 3. The axial center 26 can be understood as a point on the seal 1 that is located at half the axial width 28 of the seal 1. According to other configurations, however, the course of the sealing lip inner diameters 16, 18, 20 can also be linear or progressive, as long as the third sealing lip inner diameters 20 of the plurality 24 of inner auxiliary sealing lips 8 increase in the direction of the axial center 26 of the seal 1.

The exemplary seal 1 shown in Fig. 3 is symmetrical to a radial plane 30 that extends through the seal 1 at half of the axial width 28 of the seal 1. In the embodiment shown in Fig. 3, this radial plane 30 extends through the apex 22 of that inner auxiliary sealing lip 8 which has the largest sealing lip inner diameter 20 of all the inner auxiliary sealing lips 8 of the plurality 24 of inner auxiliary sealing lips 8. In other configurations, however, the radial plane 30 can also extend axially in the center between two inner auxiliary sealing lips 8, both of which have the same third sealing lip inner diameter 20. Of course, it is also conceivable that the seal 1 is configured symmetrically to another plane or not at all.

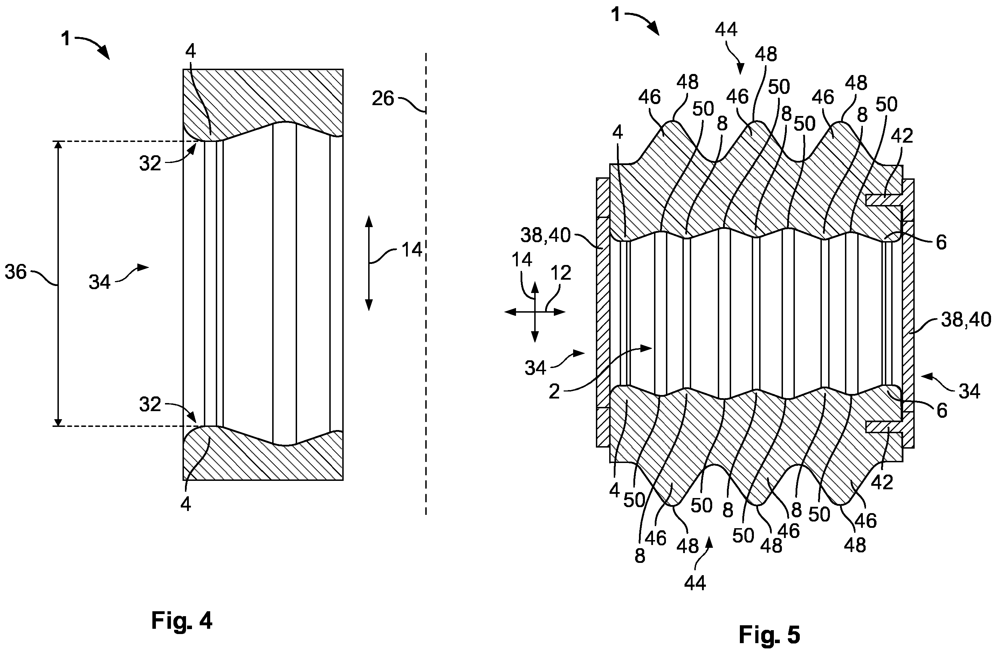

As can be seen in Fig. 3 and particularly well in the detailed view according to Fig. 4, the seal 1 can comprise a lead-in chamfer 32 at at least one axial end 34 of the seal 1 in a possible configuration. In the configuration shown in Fig. 3, the seal 1 is provided with a lead-in chamfer 32 at both axial ends 34 of the seal 1. The lead-in chamfers 32 have an inner diameter 36, measured along the radial direction 14, which increases in an axially outward direction, thus, pointing away from the axial center 26 of the seal 1. The course of the inner diameter of the lead-in chamfer 32 does not have to be progressive, as in the embodiments shown in Figs. 3 and 4, but can be degressive or linear, for example. Furthermore, the lead-in chamfer 32 does not have to extend around the entire circumference of the seal 1, so that the seal 1 can also be provided with a lead-in chamfer 32 only in sections of its circumference.

The lead-in chamfers 32 can merge into the inner sealing lip 4, 6, 8, as shown in the configuration in Figs. 3 and 4, which is arranged at the axial end 34 of the seal 1 that is provided with the lead-in chamfer 32. In the embodiment shown in Fig. 3, the one lead-in chamfer 32 merges into the first inner sealing lip 4, and the other lead-in chamfer 32 merges into the second inner sealing lip 6. However, of course, at least one lead-in chamfer 32 can also merge into an inner auxiliary sealing lip 8 or be formed by it.

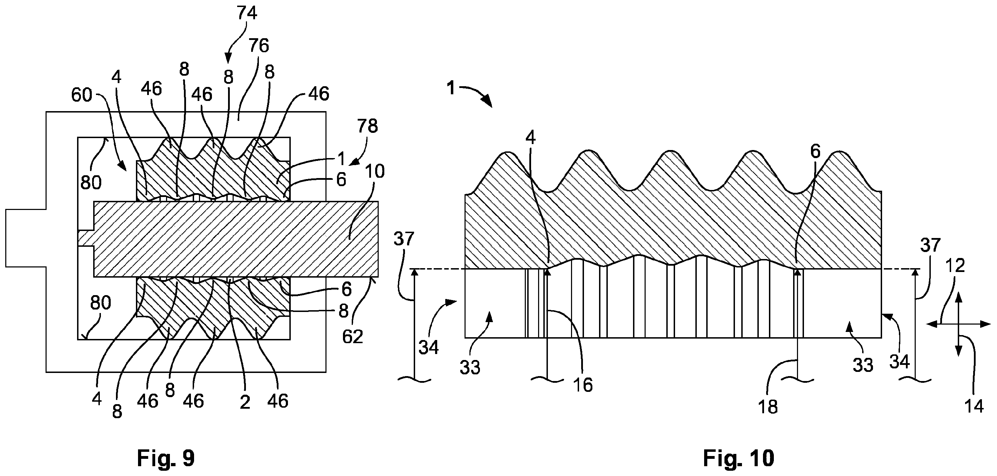

As shown in Fig. 10, the seal 1 can, in accordance with a further configuration, comprise an insertion section 33 at at least one axial end 34 of the seal 1, which is cylindrical or tubular in the illustrated embodiment. The insertion sections 33 shown in Fig. 10 have an inner diameter 37, measured along the radial direction 14, which, in contrast to the inner diameter 36 of the at least one lead-in chamfer 32 (see Figs. 3 and 4), remains the same or is constant along the axial direction 12. The seal 1 does not have to be provided with an insertion section 33 at both axial ends 34, as in the embodiment shown in Fig. 10. It is also conceivable that one axial end 34 is provided with a lead-in chamfer 32 and the other axial end 34 is provided with an insertion section 33. Likewise, there may be no lead-in chamfer 32 or no insertion section 33 at all. Like the lead-in chamfers 32 shown in Figs. 3 and 4, the at least one insertion section 33 can also merge into the inner sealing lip 4, 6, 8 that is arranged at the axial end 34 of the seal 1 that is provided with the insertion section 33. In the embodiment shown in Fig. 10, one insertion section 33 merges into the first inner sealing lip 4 and another insertion section 33 merges into the second inner sealing lip 6. The inner diameters 37 of the insertion sections 33 do not have to correspond to the sealing lip inner diameters 16, 18 of the first or second inner sealing lip 4, 6 - as shown in Fig. 10. Thus, the inner diameter 37 of at least one insertion section 33 can also be smaller or larger than the sealing lip inner diameter 16, 18 of the inner sealing lip 4, 6 into which the insertion section 33 merges.

As can be seen in Fig. 5, the first and/or the second inner sealing lip 4, 6 can be stiffened. In the illustrated embodiment, both the first inner sealing lip 4 and the second inner sealing lip 6 are stiffened, for example by a stiffening element 38. In the embodiment illustrated in Fig. 5, the first inner sealing lip 4 and the second inner sealing lip 6 are each stiffened by a stiffening element 38 in the form of a plastic ring 40. The plastic rings 40 can be arranged or attached, for example injection-molded, on the axial ends 34 of the seal 1. Of course, at least one stiffening element 38 or plastic ring 40 can also be removably and thus replaceably attached or attachable to the axial ends 34 of the seal 1.

As can also be seen from Fig. 5, a plastic ring 40 can have a collar section 42 that protrudes vertically from the remaining plastic ring 40 and protrudes in the axial direction 12 into the seal 1, in particular into the inner sealing lip 4, 6 to be reinforced or reinforced by the collar section 42. The collar section 42 does not have to extend over the entire circumference of the plastic ring 40, so that the inner sealing lip 4, 6, on which the plastic ring 40 is arranged, can only be penetrated by the collar section 42 in sections of its circumference.

As shown in the embodiments illustrated in Figs. 2, 3 and 5, the seal 1 can also have on its outside 44 at least one, but preferably several, outer sealing lips 46 that protrude outward in the radial direction 14. The outside 44 of the seal 1 can be the side of the seal 1 facing away from the cable receptacle 2 in the radial direction 14.

In the embodiments shown in Figs. 3 and 5, the outer sealing lips 46 are larger than the inner sealing lips 4, 6, 8. Furthermore, in the embodiment shown in Fig. 5, not every mountain 48 of an outer sealing lip 46 is at the same height as a valley 50 of an inner sealing lip 4, 6, 8 with respect to the axial direction 12. In preferred configurations, however, the number and/or shape of the outer sealing lips 46 can correspond to the number and/or shape of the inner sealing lips 4, 6, 8. In a particularly stable configuration of the seal 1, each mountain 48 of an outer sealing lip 46 is also at the same height with respect to the axial direction 12 as a valley 50 of an inner sealing lip 4, 6, 8.

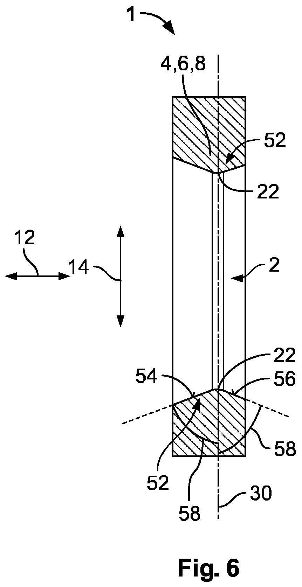

Fig. 6 shows a detailed view of an inner sealing lip 4, 6, 8 according to a further possible configuration of the seal 1 according to the invention. Like the inner sealing lips 4, 6, 8 of the configurations described above, the inner sealing lip 4, 6, 8 shown in Fig. 6 is arranged in the cable receptacle 2 and protrudes inward in the radial direction 14. The inner sealing lip 4, 6, 8 can comprise a contour 52 that projects into the cable receptacle 2 and is asymmetrical to a radial plane 30 running through the apex 22 of the inner sealing lip 4, 6, 8. In the embodiment shown in Fig. 6, the inner sealing lip 4, 6, 8 has a first flank 54 and a second flank 56, which are inclined at the same angle 58 to the radial direction 14, but are of different widths with respect to the axial direction 12. Of course, in other configurations, the flanks 54, 56 can also have different angles 58 to the radial direction 14 and/or be the same width in the axial direction 12.

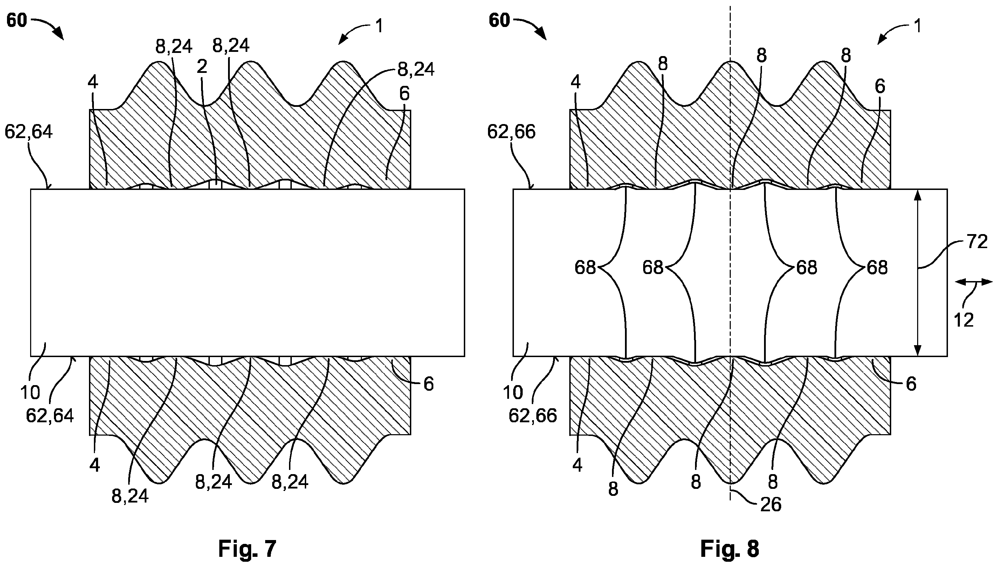

In the following, the structure and function of a seal assembly (60) according to the invention is explained by way of example with reference to Figs. 7 and 8.

Fig. 7 shows a seal assembly 60 with a seal 1 according to the invention, in the cable receptacle 2 of which a cable 10 is received at least in sections. In the illustrated embodiment, a sheath 62 of the cable 10 is in a new state 64 in which the sheath 62 of the cable 10 is not yet plastically deformed. As can be seen from Fig. 7, the first inner sealing lip 4 and the second inner sealing lip 6 and all the inner auxiliary sealing lips 8 of the plurality 24 of inner auxiliary sealing lips 8 abut in a sealing manner against the sheath 62 of the cable 10, which is in a new state 64 and is still particularly smooth in the illustrated embodiment.

Over time, the aging process of the cable 10, environmental influences such as increased temperatures, the pressure exerted by the inner sealing lips 4, 6 or inner auxiliary sealing lips 8 on the cable 10, or other influences cause the sheath 62 of the cable 10 to adopt an aging state 66 (see Fig. 8). In this aging state 66, the sheath 62 of the cable 10 is plastically deformed in comparison to the new state 64. The plastic deformations 68 of the sheath 62 of the cable 10 can, for example, as can be seen in Fig. 8, be material bulges in the sheath 62 of the cable 10, which can form between two adjacent inner sealing lips 4, 6 or inner auxiliary sealing lips 8.

The first inner sealing lip 4 and the second inner sealing lip 6 press the material of the sheath 62 of the cable 10 in the direction of the axial center 26 of the seal 1, thereby preventing the material of the sheath 62 from slipping or swelling out of the seal 1. As a result, the material of the sheath 62 of the cable 10 remains in the axial direction 12 between the first inner sealing lip 4 and the second inner sealing lip 6, preventing a reduction in the diameter of the cable 72 in this area.

Consequently, the sheath 62 of the cable 10 still abuts in a sealing manner against the inner auxiliary sealing lips 8 when the sheath 62 of the cable is in the aged state 66.

Finally, an electrical plug connector 74 is described merely by way of example with reference to Fig. 9. The electrical plug connector 74 comprises a seal assembly 60 with a cable 10 received in sections in the cable receptacle 2 of the seal 1. The structure of the seal 1, which is shown in the embodiment of the electrical plug connector 74 shown in Fig. 9, corresponds merely by way of example to the configuration of the seal 1 shown in Fig. 3. The exemplary electrical plug connector 74 has a housing 76, at the rear side 78 of which the cable 10 opens into the electrical plug connector 74. The outer sealing lips 46 of the seal 1 are in contact with an inner side 80 of the housing 76, and the inner sealing lips 4, 6 or the inner auxiliary sealing lips 8 of the seal 1 are in contact with the sheath 62 of the cable 10 in a sealing manner, whereby the electrical plug connector 74 is reliably protected against the penetration of liquids.

### Reference signs

- 1: seal
- 2: cable receptacle
- 4: first inner sealing lip
- 6: second inner sealing lip
- 8: inner auxiliary sealing lip
- 10: cable
- 12: axial direction
- 14: radial direction
- 16: first sealing lip inner diameter
- 18: second sealing lip inner diameter
- 20: third sealing lip inner diameter
- 22: apex
- 24: plurality
- 26: axial center of the seal
- 28: axial width of the seal
- 30: radial plane
- 32: lead-in chamfer
- 33: insertion section
- 34: axial end of the seal
- 36: inner diameter of the lead-in chamfer
- 37: inner diameter of the insertion section
- 38: stiffening element
- 40: plastic ring
- 42: collar section
- 44: outside of the seal
- 46: outer sealing lip
- 48: mountain of an outer sealing lip
- 50: valley of an inner sealing lip
- 52: contour
- 54: first flank
- 56: second flank
- 58: angle
- 60: seal assembly
- 62: sheath
- 64: new state
- 66: aged state
- 68: plastic deformation
- 72: cable diameter
- 74: electrical plug connector
- 76: housing
- 78: rear side of the housing
- 80: inner side of the housing

## Claims

1. Seal (1) for a cable (10), in particular a cable (10) with a relaxing insulation,
with a cable receptacle (2) extending through the seal (1) in an axial direction (12) and configured to receive the cable (10) at least in sections,
with a first inner sealing lip (4) that is arranged in the cable receptacle (2), protrudes radially inward and comprises a first sealing lip inner diameter (16),
with a second inner sealing lip (6) that is spaced apart from the first inner sealing lip (4) in the axial direction (12), is arranged in the cable receptacle (2), protrudes radially inward and comprises a second sealing lip inner diameter (18), and
with at least one inner auxiliary sealing lip (8) that is arranged between the first and second inner sealing lips (4, 6) with respect to the axial direction (12), comprises a third sealing lip inner diameter (20), is arranged in the cable receptacle (2) and protrudes radially inward,
wherein the third sealing lip inner diameter (20) is larger than the first and second sealing lip inner diameters (16, 18).

2. Seal (1) according to claim 1,
wherein a plurality (24) of inner auxiliary sealing lips (8) is provided, wherein the at least one inner auxiliary sealing lip (8) is part of said plurality (24) and the sealing lip inner diameters (20) of said plurality (24) of inner auxiliary sealing lips (8) are each larger than the first and second sealing lip inner diameters (16, 18).

3. Seal (1) according to claim 2,
wherein the sealing lip inner diameters (20) of the plurality (24) of inner auxiliary sealing lips (8) increase in the direction of an axial center (26) of the seal (1).

4. Seal (1) according to claim 2 or 3,
wherein the sealing lip inner diameters (16, 18) of the first and second inner sealing lips (4, 6) and of the at least one inner auxiliary sealing lip (8) of the plurality (24) of inner auxiliary sealing lips (8) become degressively larger in the direction of the axial center (26) of the seal (1).

5. Seal (1) according to one of claims 1 to 4,
wherein the first and/or second inner sealing lip (4, 6) is or are stiffened.

6. Seal (1) according to claim 5,
wherein the at least one inner sealing lip (4, 6) is stiffened by a stiffening element (38).

7. Seal (1) according to claim 6,
wherein the stiffening element (38) is configured as a plastic ring (40) arranged at at least one axial end (34) of the seal (1).

8. Seal (1) according to one of claims 1 to 7,
wherein at least one insertion section (33) is provided at at least one axial end (34) of the seal (1), wherein an inside diameter (37) of the at least one insertion section (33) is constant in the axial direction (12).

9. Seal (1) according to one of claims 1 to 8,
wherein at least one lead-in chamfer (32) is provided at at least one axial end (34) of the seal (1), wherein an inside diameter (36) of the at least one lead-in chamfer (32) increases in a direction pointing axially away from the axial center (26) of the seal (1).

10. Seal (1) according to claim 8 or 9,
wherein the at least one lead-in chamfer (32) or the at least one insertion section (33) merges into that inner sealing lip (4, 6, 8) which is arranged at the axial end (34) of the seal (1) provided with the lead-in chamfer (32) or with the at least one insertion section (33).

11. Seal (1) according to one of claims 1 to 10,
wherein the seal (1) is symmetrical at least to a radial plane (30) extending through the seal (1) at half the axial width (28) of the seal (1).

12. Seal (1) according to one of claims 1 to 11,
wherein a contour (52) of at least one inner sealing lip (4, 6, 8) that projects into the cable receptacle (2) is asymmetrical to a radial plane (30) extending through an apex (22) of the at least one inner sealing lip (4, 6, 8).

13. Seal (1) according to one of claims 1 to 12,
Wherein, on its outside (44) facing away from the cable receptacle (2) with respect to the radial direction (14), the seal (1) comprises at least one outer sealing lip (46) projecting radially outward.

14. Seal assembly (60),
with a seal (1) according to one of claims 1 to 13 and a cable (10) received at least in sections in the cable receptacle (2), wherein a sheath (62) of the cable (10) has a new state (64) and an aged state (66), in which the sheath (62) of the cable (10) is plastically deformed with respect to the new state (64), and wherein the material of the sheath (62) of the cable (10) in the aged state (66) is at least partially pressed in the direction of the axial center (26) of the seal (1), so that the inner auxiliary sealing lips (8) abut in a sealing manner against the sheath (62) of the cable (10).

15. Electrical plug connector (74) with at least one seal (1) according to one of claims 1 to 13 and/or at least one seal assembly (60) according to claim 14.
